# EUROPÄISCHE PATENTSCHRIFT

(11) **EP 2 303 657 B1**
(45) Veröffentlichungstag und Bekanntmachung des Hinweises auf die Patenterteilung: **19.12.2012**
(21) Anmeldenummer: 09780050.2
(22) Anmeldetag: 01.07.2009
(51) Int. Cl.: B60T 13/26, B60T 13/40, B60T 15/20, B60T 17/04

(54) **LUFTVERSORGUNG EINER FEDERSPEICHERBREMSE AUS WENIGSTENS ZWEI RESERVEDRUCKLUFTBEHÄLTERN**
AIR SUPPLY TO A SPRING-LOADED BRAKE COMPRISING AT LEAST TOW RESERVE COMPRESSED AIR CONTAINERS
ALIMENTATION EN AIR D'UN FREIN À RESSORT ACCUMULATEUR PAR AU MOINS DEUX RÉCIPIENTS DE RÉSERVE D'AIR COMPRIMÉ

(30) Priorität: 11.07.2008 DE 102008033288
(43) Veröffentlichungstag der Anmeldung: 06.04.2011
(73) Patentinhaber: Siemens Aktiengesellschaft, 80333 München (DE)
(72) Erfinder: ZIPPEL, Volker, 91315 Höchstadt (DE); SCHIEFER, Dieter, 91085 Weisendorf (DE); SCHWEISFURTH, Jörg Nikolaus, 82205 Gilching (DE)
(86) Internationale Anmeldenummer: PCT/EP2009/058241
(87) Internationale Veröffentlichungsnummer: WO 2010/003854

(56) Entgegenhaltungen:
- EP-A- 0 002 853
- EP-A- 1 273 498
- WO-A-2009/071913
- GB-A- 1 210 685
- GB-A- 2 145 485
- US-A- 4 453 777

## Beschreibung

Die Erfindung betrifft eine Vorrichtung zum Bremsen eines Fahrzeugs mit wenigstens zwei Bremssystemen, die jeweils eine mit einem Bewegteil des Fahrzeugs in Reibkontakt bringbare Reibbremse aufweisen, die über wenigstens eine Hebelmechanik mit einem Bremsaktor und einem Federspeicherbremszylinder verbunden ist, wobei jeder Bremsaktor über Bremssteuerungsmittel mit einem Reservedruckluftbehälter in Wirkverbindung bringbar ist.

Eine solche Vorrichtung ist dem Fachmann aus der Praxis bekannt. So sind beispielsweise Schienenfahrzeuge in Betrieb, bei denen jedes Drehgestell oder jeder Wagen über ein eigenes Bremssystem verfügt. Jedes Bremssystem ist als pneumatisches Bremssystem realisiert, das mit einer Reibbremse ausgerüstet ist, bei der ein Bremsbelag gegen ein Rad des Schienenfahrzeugs oder gegen eine Bremsscheibe unter Reibschluss gepresst wird. Aufgrund des Reibschlusses kommt es zur Verzögerung und somit zum Bremsen des Schienenfahrzeugs. Zum Einleiten einer Andruckkraft ist der Reibbelag über eine Hebelmechanik mit einem Bremsaktuator verbunden, der als ein pneumatischer Zylinder mit einem beweglichen Zylinderkolben ausgebildet ist, an dem eine Kolbenstange befestigt ist. Durch Erhöhen des pneumatischen Druckes im Bremszylinder kommt es zu einer Bewegung des Bremskolbens, wobei die Kolbenbewegung und Kolbenkraft über die Hebelmechanik in den Reibbelag eingeleitet wird. Zum Bereitstellen der notwendigen Druckluft ist in der Regel ein allen Fahrzeugen gemeinsamer Druckluftgenerator vorgesehen, der zweckmäßige Reservedruckluftbehälter mit Druckluft befüllt. Zum gesteuerten Bremsen sind Steuerungsmittel wie Steuerventile, Magnetventile, Relaisventile und dergleichen vorgesehen, die eine kontrollierte Beaufschlagung des Bremszylinders mit Druckluft ermöglichen.

Um auch im abgerüsteten Zustand ein unverwünschtes Wegrollen des Schienenfahrzeugs zu vermeiden, sind so genannte Federspeicherbremszylinder vorgesehen, die zweckmäßigerweise über die gleiche Hebelmechanik auf den Reibbelag der Reibbremse einwirken. Im Gegensatz zum Bremsaktuator ist jedoch im Federspeicherbremszylinder eine Feder vorgesehen, die im entlüfteten Zustand des Federspeicherbremszylinders die notwendige Haltekraft bereitstellt. Zum Lösen der Federspeicherbremse wird der Federspeicherbremszylinder über Federspeichersteuerungsmittel mit Druckluft beaufschlagt, wobei die sich daraufhin einstellende Druckkraft der Federkraft entgegengerichtet ist. Bei ausreichend hohem pneumatischem Druck löst sich die Federspeicherbremse.

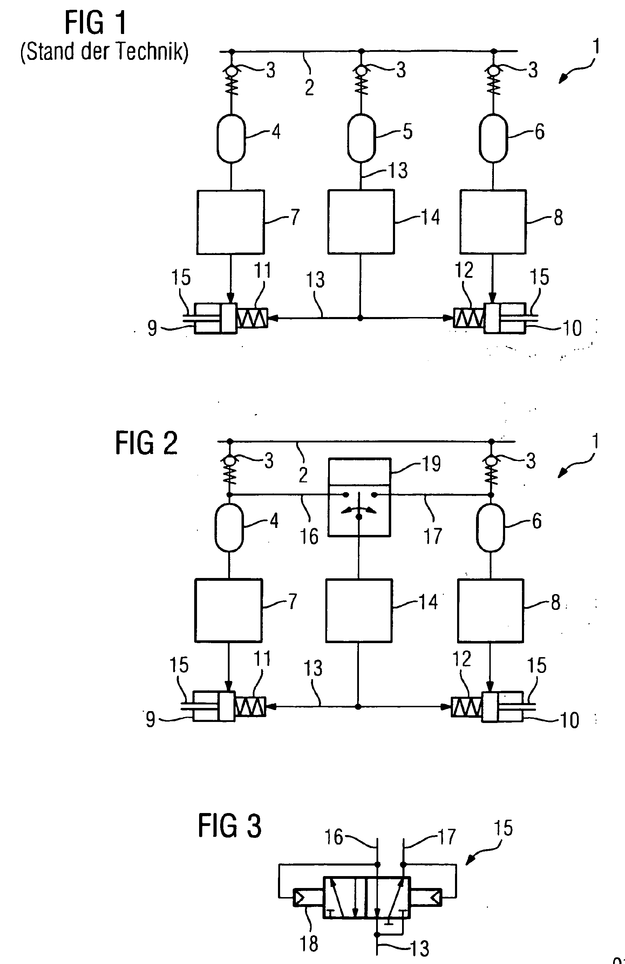

Figur 1 zeigt ein Ausführungsbeispiel einer Vorrichtung gemäß dem Stand der Technik, wobei lediglich die für die später genauer definierte Erfindung wesentlichen Bauteile schematisch dargestellt sind. Die Vorrichtung 1 umfasst eine Hauptluftbehälterleitung 2, die im Normalbetrieb mit Luft mit einem Druck von 10 bar beaufschlagt ist. Die Hauptluftbehälterleitung 2 ist über Rückschlagventile 3 mit Reservedruckluftbehältern 4, 5 und 6 verbunden, wobei die Reservedruckluftbehälter 4 und 6 über Bremssteuerungsmittel 7 und 8 jeweils mit einem Bremsaktuator 9 beziehungsweise 10 verbunden sind. Darüber hinaus sind Federspeicherbremszylinder 11 und 12 dargestellt, die über eine weitere pneumatische Verbindung 13 und Federspeichersteuerungsmittel 14 mit dem Reservedruckluftbehälter 5 verbunden sind. Bremsaktuator 9 und Federspeicherbremszylinder 11 wirken auf die gleiche Hebelmechanik 15 ein, über welche die vom Bremsaktuator 9 oder Federspeicherbremszylinder 11 erzeugte Bremskraft in eine figürlich nicht dargestellte Reibbremse einleitbar ist. Entsprechendes gilt für den Federspeicherbremszylinder 12 und den Bremsaktuator 10.

Die in Figur 1 dargestellte Vorrichtung gemäß dem Stand der Technik weist den Nachteil auf, dass die Reservedruckluftbehälter 4, 5, 6 vollständig voneinander entkoppelt sind. Sind beispielsweise die Reserveluftdruckbehälter 4 und 6 eines Fahrzeuges druckfrei, wohingegen der Reservedruckluftbehälter 5 mit Druckluft befüllt ist, ist die Feststellbremse gelöst und ein Bremsen des Schienenfahrzeugs unmöglich. Ein solcher Zustand stellt natürlich ein hohes Sicherheitsrisiko dar. Aus diesem Grunde wurde vorgeschlagen, Bremsaktuator und Federspeicherbremszylinder mit Druckluft aus dem gleichen Reservedruckluftbehälter zu versorgen. Eine solche Vorrichtung ist beispielsweise in der EP 0 002 853 B1 beschrieben.

Ein Schienenfahrzeug mit mehreren Drehgestellen oder Wagen weist in der Regel mehrere Bremssysteme auf, die jeweils einem Drehgestell oder Wagen zugeordnet sind. Bei zwei unabhängig voneinander wirkenden Bremssystemen würde bei einem entkoppelten System gemäß Figur 1 einer der Federspeicherbremszylinder 11 über ihn ausschließlich zugeordnete Federspeichersteuerungsmittel 14 vom Reservedruckluftbehälter 4 mit Druckluft versorgt. Der andere Federspeicherbremszylinder 12 würde über zusätzliche in Figur 1 nicht dargestellte Federspeichersteuerungsmittel vom Reservedruckluftbehälter 6 gespeist. Eine solche Vorrichtung gemäß dem Stand der Technik ist zwar sicher, jedoch kostenintensiv.

Die WO 2009/071913 A2 offenbart ein pneumatisches Bremssystem für ein Schienenfahrzeug mit einer Hauptluftleitung, die mit Druckluft beaufschlagbar ist. Um bei einem Bremsvorgang den Transport von Druckluft über die Hauptluftleitung zu den Bremszylindern zu begrenzen, ist ein Hilfsreservoir vorgesehen, das mit Druckluft befüllt und in unmittelbarer Nähe der Bremszylinder angeordnet ist. Das Hilfsreservoir kann über die Hauptluftleitung mit Druckluft beaufschlagt werden und ist eingangsseitig an ein Relaisventil angeschlossen, das ausgangsseitig einen zum Bremsen oder Lösen der Bremse erforderlichen Bremsdruck bereitstellt. Neben einem Hilfsreservoir ist darüber hinaus ein Gleitschutzreservoir vorgesehen, das über ein Auswahlventil ebenfalls mit dem Eingang des Relaisventils verbunden werden kann. Das besagte Auswahlventil verfügt über ein von einer Steuerungseinheit ansprechbares Magnetventil. Stellt die Steuerungseinheit beispielsweise einen Schlupf der Räder auf den Gleisen beispielsweise beim Bremsen fest, wird das Magnetventil angesteuert, woraufhin das Auswahlventil den Eingang des Relaisventils nicht länger mit dem Hilfsreservoir, sondern mit dem zusätzlich vorgesehenen Gleitschutzreservoir verbindet.

Weitere Bremssysteme sind in der GB A 1 210 385, der GB A 2 145 485 und der US A 4,453,777 beschrieben.

Aufgabe der Erfindung ist es, eine Vorrichtung der eingangs genannten Art bereitzustellen, die sowohl sicher als auch kostengünstig ist.

Die Erfindung löst diese Aufgabe dadurch, dass die Federspeicherbremszylinder zumindest teilweise über gemeinsame Federspeichersteuerungsmittel und eine Minimaldruckauswahleinheit mit mehreren Reservedruckluftbehältern in Wirkverbindung stehen, wobei die Minimaldruckauswahleinheit die Wirkverbindung zu demjenigen Reservedruckluftbehälter herstellt, der mit dem geringsten Druck beaufschlagt ist.

Erfindungsgemäß ist eine so genannte Minimaldruckauswahleinheit bereitgestellt, die darüber entscheidet, welcher Reservedruckluftbehälter beim Lösen der Federspeicherfeststellbremse die notwendige Menge an Druckluft bereitstellt. Die Minimaldruckauswahleinheit sorgt somit für eine Verbindung zwischen Federspeicherbremszylinder und demjenigen Reservedruckluftbehälter, in dem der geringste Innendruck vorherrscht. Auf diese Weise ist ein Lösen der Feststellbremse unmöglich, wenn einer der Reservedruckluftbehälter druckfrei und eine pneumatische Bremsung mittels des zugeordneten Bremsaktuators unmöglich gemacht ist. Ist eine pneumatische Bremse ohne Druckluft, wird die Feststellbremse selbständig aktiv. Zusätzliche Federspeicherbremssteuermittel sind jedoch im Rahmen der Erfindung überflüssig oder deren Anzahl zumindest herabgesetzt. Erfindungsgemäß ist somit sowohl eine sichere als auch kostengünstige Vorrichtung zum Abbremsen eines Fahrzeuges bereitgestellt. Ein Bremssystem weist beispielsweise einen Bremsaktor, einen Federspeicherbremszylinder, Bremssteuerungsmittel und wenigstens einen Reservedruckluftbehälter auf.

Das Fahrzeug ist zweckmäßigerweise ein Schienenfahrzeug. Insbesondere Schienenfahrzeuge weisen mehrere Bremssysteme auf, die beispielsweise unterschiedlichen Wagen oder Drehgestellen des Schienenfahrzeugs zugeordnet sind.

Gemäß einer zweckmäßigen Ausgestaltung der erfindungsgemäßen Vorrichtung ist die Minimaldruckauswahleinheit ein pneumatisch betätigbares 5/2-Wegeventil, das eingangsseitig sowohl mit einem ersten Reservedruckluftbehälter als auch mit einem zweiten Reservedruckluftbehälter und ausgangsseitig über die Federspeichersteuerungsmittel mit jedem Federspeicherbremszylinder verbunden ist. Pneumatisch betätigbare 5/2-Wegeventile sind als solche bekannt, so dass an dieser Stelle hierauf nicht ausführlich eingegangen zu werden braucht. In diesem Zusammenhang wird auch über die ausführlichere Darstellung im Zusammenhang mit der Figurenbeschreibung hingewiesen.

Zweckmäßigerweise ist die Minimaldruckauswahleinheit mit zwei Reservedruckluftbehältern verbunden, die jeweils einem Bremssystem zugeordnet sind.

Weitere Vorteile ergeben sich, wenn alle Federspeicherbremszylinder mit den gemeinsamen Federspeichersteuerungsmitteln und der Minimaldruckauswahleinheit verbunden sind. Somit ist die Sicherheit noch weiter erhöht, wobei die Kosten reduziert sind. Die Minimaldruckauswahleinheit kann dann mit allen Reservedruckluftbehältern des Fahrzeuges, oder aber nur mit einer Auswahl der Reservedruckluftbehälter verbunden sein. Wesentlich ist im Rahmen der Erfindung jedoch, dass die Minimaldruckauswahleinheit mit wenigstens zwei Reservedruckluftbehältern verbunden ist.

Beispielsweise wird jeder Reservedruckluftbehälter von einer gemeinsamen Druckluftquelle mit Druck beaufschlagt.

Dadurch sind die Drücke der Reservedruckbehälter im Fahr- und im Schleppbetrieb gleich groß, während sich bei einem Fahrzeug ohne aktive Druckluftquelle durch Luftverbrauch oder Undichtigkeiten unterschiedliche Druckwerte ergeben.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Ausführungsbeispiel einer Vorrichtung gemäß dem Stand der Technik,
- Figur 2: ein Ausführungsbeispiel der erfindungsgemäßen Vorrichtung und
- Figur 3: ein Ausführungsbeispiel einer Minimaldruckauswahleinheit zeigen.

Figur 1 zeigt ein Ausführungsbeispiel einer Vorrichtung gemäß dem Stand der Technik, das bereits zu Beginn dieser Anmeldung ausführlich beschrieben wurde.

Figur 2 zeigt ein Ausführungsbeispiel der erfindungsgemäßen Vorrichtung 1. Die Vorrichtung 1 umfasst eine Hauptbehälterdruckluftleitung 2, die mit einem figürlich nicht dargestellten Druckluftgenerator verbunden ist, der Druckluft mit einem Druck von 10 bar bereitstellt. Die Hauptbehälterdruckluftleitung 2 ist über Rückschlagventile 3 mit Reservedruckluftbehältern 4 und 6 verbunden, die wiederum über Bremssteuerungsmittel 7 beziehungsweise 8 mit Bremsaktuatoren 9 beziehungsweise 10 verbunden sind. Die Bremsaktuatoren 9, 10 sind in dem gezeigten Ausführungsbeispiel als einfache Bremszylinder ausgebildet, wobei eine mit Druck beaufschlagte Bremskammer von einem beweglich geführten Kolben begrenzt ist. Der Kolben ist über eine Kolbenstange mit einer Hebelmechanik 15 verbunden, in deren Zuge die Bewegung und Kraft des Bremskolbens in che wird unter Reibschluss auf ein Bewegteil des Schienenfahrzeugs gepresst, wodurch es zu einer negativen Verzögerung des Fahrzeugs kommt. Als Bewegteil kommen beispielsweise die Räder oder Bremsscheiben des Schienenfahrzeugs in Betracht.

In Figur 2 sind ferner Federspeicherbremszylinder 11 und 12 erkennbar, die über eine gemeinsame pneumatische Verbindungsleitung 13 mit Federspeichersteuerungsmitteln 14 verbunden sind. Die Federspeichersteuerungsmittel 14 sind wiederum mit dem Ausgang einer Minimaldruckauswahleinheit 19 verbunden, die eingangsseitig über Druckluftverbindungen 16 und 17 mit den Reservedruckluftbehältern 4 und 6 verbunden sind.

Ist der Druck im Reservedruckluftbehälter 6 geringer als der Druck im Reservedruckluftbehälter 4, stellt die Minimaldruckauswahleinheit 19 eine Verbindung zwischen dem Reservedruckluftbehälter 6 und den Federspeicherzylindern 11 und 12 her. Eine Verbindung zwischen Reservedruckluftbehälter 4 und den Federspeicherbremszylindern 11 und 12 wird hergestellt, wenn der Druck im Reservedruckluftbehälter 4 geringer ist als derjenigen im Reservedruckluftbehälter 6. Ist daher der Druck in einem der Reservedruckluftbehälter 4 beziehungsweise 6 aufgrund einer Leckage gleich null, so dass die Betriebsbremse ausfällt, kann die Federspeicherbremse nicht mehr gelöst werden. Ein Totalausfall der Bremse ist auf diese Weise vermieden.

An dieser Stelle soll darauf hingewiesen werden, dass die in Figur 2 nur schematisch dargestellten Bremssteuerungsmittel 7 und 8 beziehungsweise die Federspeichersteuerungsmittel 14 zweckmäßige pneumatische Steuerungsmittel umfassen, wie beispielsweise Druckminderventile, Düsen, Doppelimpulsmagnetventile, Anzeige- und Messeinrichtungen oder dergleichen. Solche Steuerungsmittel sind dem Fachmann jedoch bekannt, so dass an dieser Stelle hierauf nicht detailliert eingegangen zu werden braucht.

Figur 3 zeigt ein Ausführungsbeispiel der in Figur 2 angedeuteten Minimaldruckauswahleinheit 19, die in Form eines pneumatisch betätigten 5/2-Wegeventils dargestellt ist. Das 5/2-Wegeventil weist zwei Eingänge 16 und 17 auf. Der in den Eingängen 16 und 17 herrschende Druck liegt auch jeweils an einem Ende eines Schiebereglers 18 an. Der Schieberegler 18 ist längsbeweglich geführt und wird daher an seinen Enden von dem jeweils höheren Druck zum niedrigen Druck hin verschoben. Je nach Stellung des Schiebereglers 18 ist für eine Verbindung des Ausgangs 13 mit einem der Eingänge 16 oder 17 gesorgt. In der in Figur 3 gezeigten Stellung ist der Druck im Reservedruckluftbehälter 6 und somit am Eingang 17 des 5/2-Wegeventils größer als der am Eingang 16. Dadurch wird der Schieberegler in die in Figur 3 gezeigte Stellung nach links bewegt. In dieser Stellung ist der mit weniger Druck beaufschlagte Eingang 16 mit dem Ausgang 13 verbunden. Liegt hingegen der Druck am Eingang 17 unterhalb des Druckes am Eingang 16, kommt es zur Verschiebung des Schiebereglers 18 in eine Stellung, in welcher der Eingang 17 mit dem Ausgang 13 verbunden ist. Auf diese Weise ist derjenige Eingang mit dem Ausgang 13 verbunden, an dem ein geringerer Druck eingestellt ist. Mit anderen Worten ist eine Minimaldruckauswahleinheit 19 bereitgestellt.

## Patentansprüche

1. Vorrichtung (1) zum Bremsen eines Fahrzeugs mit wenigstens zwei Bremssystemen, die jeweils eine mit einem Bewegteil des Fahrzeugs in Reibkontakt bringbare Reibbremse aufweisen, die über wenigstens eine Hebelmechanik (15) mit einem Bremsaktor (9) und einem Federspeicherbremszylinder (11) verbunden ist, wobei jeder Bremsaktor (9) über Bremssteuerungsmittel (7) mit einem Reservedruckluftbehälter (4) in Wirkverbindung bringbar ist,
**dadurch gekennzeichnet, dass** die Federspeicherbremszylinder (11, 12) zumindest teilweise über gemeinsame Federspeichersteuerungsmittel (14) und eine Minimaldruckauswahleinheit (19) mit mehreren Reservedruckluftbehälter (4,6) in Wirkverbindung stehen, wobei die Minimaldruckauswahleinheit (19) die Wirkverbindung zu demjenigen Reservedruckluftbehälter (4,6) herstellt, der mit dem geringsten Druck beaufschlagt ist.

2. Vorrichtung (1) nach Anspruch 1,
**dadurch gekennzeichnet , dass** die Minimaldruckauswahleinheit (19) ein pneumatisch betätigbares 5/2-Wegeventil ist, das eingangsseitig mit dem ersten Reservedruckluftbehälter (4) und dem zweiten Reservedruckluftbehälter (6) verbunden ist und ausgangsseitig über die Federspeichersteuerungsmittel (14) mit jedem Federspeicherbremszylinder (11,12) verbunden ist.

3. Vorrichtung (1) nach Anspruch 1 oder 2,
**dadurch gekennzeichnet, dass** die Minimaldruckauswahleinheit (19) mit zwei Reservedruckbehältern (4,6) verbunden ist, die jeweils einem Bremssystem zugeordnet sind.

4. Vorrichtung (1) nach einem der vorhergehenden Ansprüche,
**dadurch gekennzeichnet , dass** die Minimaldruckauswahleinheit (19) mit allen Reservedruckbehältern (4,6) verbunden ist.

## Claims

1. Device (1) for braking a vehicle having at least two brake systems which in each case have a friction brake which can be brought into frictional contact with a moving part of the vehicle and which is connected via at least one lever mechanism (15) to a brake actuator (9) and to a spring-loaded brake cylinder (11), with each brake actuator (9) being operatively connectable to a reserve compressed-air vessel (4) via brake control means (7), **characterized in that** the spring-loaded brake cylinders (11, 12) are operatively connected to a plurality of reserve compressed-air vessels (4, 6) at least partially via common spring accumulator control means (14) and a minimum-pressure selection unit (19), the minimum-pressure selection unit (19) making the operative connection to that reserve compressed-air vessel (4, 6) which is acted upon by the lowest pressure.

2. Device (1) according to Claim 1, **characterized in that** the minimum-pressure selection unit (19) is a pneumatically actuable 5/2-way valve which on the inlet side is connected to the first reserve compressed-air vessel (4) and to the second reserve compressed-air vessel (6) and on the outlet side is connected to each spring-loaded brake cylinder (11, 12) via the spring accumulator control means (14).

3. Device (1) according to Claim 1 or 2, **characterized in that** the minimum-pressure selection unit (19) is connected to two reserve compressed-air vessels (4, 6) which are in each case assigned to a brake system.

4. Device (1) according to one of the preceding claims, **characterized in that** the minimum-pressure selection unit (19) is connected to all the reserve compressed-air vessels (4, 6).

## Revendications

1. Dispositif ( 1 ) de freinage d'un véhicule ayant au moins deux systèmes de frein, qui comporte respectivement un frein à friction pouvant être mis en contact de friction avec une partie mobile du véhicule, frein qui par au moins un mécanisme ( 15 ) de levier est relié à un actionneur ( 9 ) de frein et à un cylindre ( 11 ) de frein à ressort accumulateur, chaque actionneur ( 9 ) de frein pouvant être mis en liaison de coopération avec un récipient ( 4 ) d'air comprimé de réserve par un moyen ( 7 ) de commande de frein,
**caractérisé en ce que** le cylindre ( 11, 12 ) de frein à ressort accumulateur est en liaison d'action au moins en partie avec plusieurs récipients ( 4, 6 ) d'air comprimé de réserve par des moyens ( 14 ) communs de commande à ressort accumulateur et par une unité ( 19 ) de sélection de pression minimum, l'unité ( 19 ) de sélection de pression minimum procurant la liaison d'action vers le récipient ( 4, 6 ) d'air comprimé de réserve, qui est alimenté à la pression la plus basse.

2. Dispositif ( 1 ) suivant la revendication 1,
**caractérisé en ce que**
l'unité ( 19 ) de sélection de pression minimum est une vanne à 5/2 voies pouvant être actionnée pneumatiquement, qui est reliée du côté de l'entrée au premier récipient ( 4 ) d'air comprimé de réserve et du deuxième récipient ( 6 ) d'air comprimé de réserve et du côté de la sortie à chaque cylindre ( 11, 12 ) de frein à ressort accumulateur par les moyens ( 14 ) de commande à ressort accumulateur.

3. Dispositif ( 1 ) suivant la revendication 1 ou 2,
**caractérisé en ce que**
l'unité ( 19 ) de sélection de pression minimum est reliée à deux récipients ( 4, 6 ) d'air comprimé de réserve, qui sont associés respectivement à un système de frein.

4. Dispositif ( 1 ) suivant l'une des revendications précédentes,
**caractérisé en ce que**
l'unité ( 19 ) de sélection de pression minimum est reliée à tous les récipients ( 4, 6 ) d'air comprimé de réserve.
